# EUROPEAN PATENT APPLICATION

(11) **EP 4 353 502 A1**
(43) Date of publication of application: **17.04.2024**
(21) Application number: 22928832.9
(22) Date of filing: 15.09.2022
(51) Int. Cl.: B60H 1/22

(54) **VEHICULAR REFRIGERATION CYCLE UNIT**

(30) Priority: 28.02.2022 WO PCT/JP2022/008390
(71) Applicant: MITSUBISHI HEAVY INDUSTRIES THERMAL SYSTEMS, LTD., Tokyo 100-8332 (JP)
(72) Inventor: KOBAYASHI, Takayuki, Tokyo 100-8332 (JP); UKAI, Tetsuzo, Tokyo 100-8332 (JP); YAMAMOTO, Hiroyuki, Tokyo 100-8332 (JP); SAITO, Katsuhiro, Tokyo 100-8332 (JP); MORISHITA, Masatoshi, Tokyo 100-8332 (JP); NOYAMA, Hideto, Tokyo 100-8332 (JP)
(74) Representative: Cabinet Beau de Loménie
(86) International application number: PCT/JP2022/034516
(87) International publication number: WO 2023/162311

(57) **Abstract**

A vehicular refrigeration cycle unit is a vehicular refrigeration cycle unit installed between a vehicle exterior heat exchanger and a vehicle interior heat exchanger and exchanging heat between secondary refrigerants respectively flowing through the vehicle exterior heat exchanger and the vehicle interior heat exchanger, the vehicular refrigeration cycle unit including: a refrigeration cycle including a compressor, a condenser, an expansion valve, and an evaporator through which a primary refrigerant sequentially flows; an exterior flow passage through which the secondary refrigerant is circulated between the evaporator and the vehicle exterior heat exchanger; an interior flow passage through which the secondary refrigerant is circulated between the condenser and the vehicle interior heat exchanger; a pair of flow passage switching valves connecting the exterior flow passage and the interior flow passage to allow to switch the flow state of the second refrigerant between the exterior flow passage and the interior flow passage; a first bypass flow passage which is installed aside the exterior flow passage and with bypassing the evaporator; and a first flow rate adjustment unit adjusting a flow rate of the secondary refrigerant flowing into the evaporator.

## Description

### Technical Field

The present disclosure relates to a vehicular refrigeration cycle unit. Priority is claimed on PCT/JP2022/008390, filed February 28, 2022, the content of which is incorporated herein by reference.

### Background Art

In vehicles such as electric automobiles that are not equipped with generators (engines), a secondary refrigerant type heat pump system is used as a heat source for an air conditioner (heating). The secondary refrigerant type heat pump system mainly includes a vehicle exterior heat exchanger which is connected to an evaporator of a refrigeration cycle allowing a primary refrigerant to flow therethrough and through which a secondary refrigerant flows and a vehicle interior heat exchanger which is connected to a condenser side of the refrigeration cycle and through which the secondary refrigerant flows. The heat of the secondary refrigerant heated by the exterior air is transferred to the vehicle interior heat exchanger via the refrigeration cycle. Accordingly, it is possible to heat the interior air.

Incidentally, in the heat pump system, sufficient pressure of the primary refrigerant cannot be obtained even when heat is absorbed from outside air under a condition that an outside air temperature is very low. As a result, there was a problem that a compressor of the refrigeration cycle was not able to generate a sufficient flow rate of the refrigerant. Here, a device according to Patent Document 1 below adopts a configuration in which a secondary refrigerant flowing through a vehicle interior heat exchanger (that is, a condenser side) flows while being mixed at an evaporator side of a refrigeration cycle. Accordingly, it is said that the pressure of a primary refrigerant heading to a compressor via the evaporator can be increased.

### Citation List

### Patent Document

Patent Document 1: Japanese Patent No. 6083304

### Summary of Invention

### Technical Problem

However, it is difficult to precisely control the temperature of the secondary refrigerant only in the configuration in which the secondary refrigerant simply flows while being mixed at the evaporator side as described above.

The present disclosure has been made to solve the above-described problems and an object thereof is to provide a vehicular refrigeration cycle unit capable of more precisely adjusting a temperature of a secondary refrigerant.

### Solution to Problem

In order to solve the above-described problems, a vehicular refrigeration cycle unit according to the present disclosure is a vehicular refrigeration cycle unit which is installed between a vehicle exterior heat exchanger and a vehicle interior heat exchanger and exchanging heat between secondary refrigerants respectively flowing through the vehicle exterior heat exchanger and the vehicle interior heat exchanger, the vehicular refrigeration cycle unit including: a refrigeration cycle including a compressor, a condenser, an expansion valve, and an evaporator through which a primary refrigerant sequentially flows; an exterior flow passage through which the secondary refrigerant is circulated between the evaporator and the vehicle exterior heat exchanger; an interior flow passage through which the secondary refrigerant is circulated between the condenser and the vehicle interior heat exchanger; a pair of flow passage switching valves connecting the exterior flow passage and the interior flow passage to allow to switch a flow state of the second refrigerant between the exterior flow passage and the interior flow passage; a first bypass flow passage which is aside the exterior flow passage with bypassing the evaporator; and a first flow rate adjustment unit adjusting a flow rate of the secondary refrigerant flowing into the first bypass flow passage and the evaporator, wherein the first flow rate adjustment unit is a flow passage switching valve distributing the secondary refrigerant flowing from one flow passage into two flow passages and is allowed to change a ratio of a flow rate of the secondary refrigerant between these two flow passages.

### Advantageous Effects of Invention

According to the present disclosure, it is possible to provide a vehicular refrigeration cycle unit capable of more precisely adjusting a temperature of a secondary refrigerant.

### Brief Description of Drawings

FIG. 1 is a circuit diagram showing a configuration of a vehicular refrigeration cycle unit according to a first embodiment of the present disclosure.
FIG. 2 is a circuit diagram showing a configuration of the vehicular refrigeration cycle unit according to the first embodiment of the present disclosure and is a diagram showing an operation state in a heat pump mode.
FIG. 3 is a circuit diagram showing a configuration of the vehicular refrigeration cycle unit according to the first embodiment of the present disclosure and is a diagram showing an operation state in a heater mode.
FIG. 4 is a graph showing a comparison of Mollier diagrams in a heater mode and a heat pump mode.
FIG. 5 is a flowchart showing a process flow of a control unit according to the first embodiment of the present disclosure.
FIG. 6 is a circuit diagram showing a configuration of a vehicular refrigeration cycle unit according to a second embodiment of the present disclosure and is a diagram showing an operation state in a heater mode.
FIG. 7 is a circuit diagram showing a configuration of a vehicular refrigeration cycle unit according to a third embodiment of the present disclosure and is a diagram showing one aspect of control when starting a heater mode.
FIG. 8 is a circuit diagram showing a configuration of the vehicular refrigeration cycle unit according to the third embodiment of the present disclosure and is a diagram showing another aspect of control when starting a heater mode.
FIG. 9 is a circuit diagram showing a configuration of the vehicular refrigeration cycle unit according to the third embodiment of the present disclosure and is a diagram showing still another aspect of control when operating a heater mode.
FIG. 10 is a flowchart showing a process flow of a control unit according to the third embodiment of the present disclosure.

### Description of Embodiments

### <First embodiment>

### (Configuration of vehicular refrigeration cycle unit)

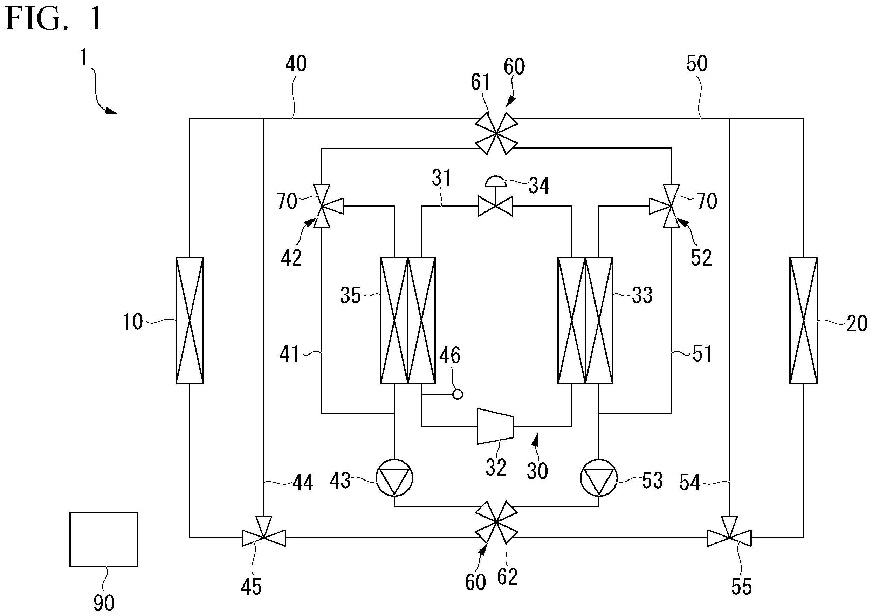

Hereinafter, a vehicular refrigeration cycle unit 1 according to a first embodiment of the present disclosure will be described with reference to FIGS. 1 to 5.

The vehicular refrigeration cycle unit 1 according to this embodiment is air conditioning equipment installed in a transportation vehicle such as an electric vehicle that does not have an engine as a heat source during heating. The vehicular refrigeration cycle unit 1 is mounted to be interposed between a vehicle exterior heat exchanger 10 disposed on a vehicle exterior side and a vehicle interior heat exchanger 20 disposed on a vehicle interior side. The refrigerant (coolant) flowing through the vehicle exterior heat exchanger 10 and the vehicle interior heat exchanger 20 is hereinafter referred to as a "secondary refrigerant" and the refrigerant flowing through a refrigeration cycle 30 (described later) is referred to as a "primary refrigerant".

As shown in FIG. 1, the vehicular refrigeration cycle unit 1 includes the refrigeration cycle 30 through which the primary refrigerant flows, an exterior flow passage 40 which is disposed on an exterior side, an interior flow passage 50 which is disposed on an interior side, a pair of flow passage switching valves 60 which switches the mutual flow state of the exterior flow passage 40 and the interior flow passage 50, a first bypass flow passage 41 which is alongside the exterior flow passage 40, a first flow rate adjustment unit 42, a second bypass flow passage 51 which is alongside the interior flow passage 50, a second flow rate adjustment unit 52, a first pump 43 which is provided on the exterior flow passage 40, a second pump 53 which is provided on the interior flow passage 50, an exterior connection flow passage 44, a first switching valve 45, an interior connection flow passage 54, a second switching valve 55, a measurement unit 46, and a control unit 90.

Additionally, in the drawings, if various valves of the vehicular refrigeration cycle unit 1 are painted black, they are in a closed state and if these valves are painted white, they are in an open state. Further, the directions in which various refrigerants flow are indicated by arrows drawn along the circuits.

### (Configuration of refrigeration cycle)

The refrigeration cycle 30 is composed of a plurality of devices that realize a thermodynamic cycle. The refrigeration cycle 30 is a refrigerant circuit that allows the primary refrigerant as a heat medium to sequentially flow and circulate in a plurality of devices while repeatedly compressing, expanding, evaporating, and condensing the primary refrigerant in order to exchange heat between the primary refrigerant and the secondary refrigerant.

The refrigeration cycle 30 includes a refrigeration cycle line 31 and a compressor 32, a condenser 33, an expansion valve 34, and an evaporator 35 sequentially arranged on this refrigeration cycle line 31.

The evaporator 35 is a plate heat exchanger that evaporates (vaporizes) the primary refrigerant by exchanging heat between the primary refrigerant sequentially flows through the refrigeration cycle 30 and the secondary refrigerant introduced from the outside of the refrigeration cycle 30. The primary refrigerant inside the evaporator 35 absorbs heat from the secondary refrigerant and simultaneously cools the secondary refrigerant.

The compressor 32 is a device that absorbs heat and compresses the vaporized primary refrigerant by passing through the evaporator 35. The pressure of the primary refrigerant introduced into the compressor 32 is increased to a predetermined pressure higher than before compression by the compression operation of the compressor 32. Accordingly, the temperature of the primary refrigerant becomes higher than before compression.

The condenser 33 is a plate heat exchanger that condenses (liquefies) the primary refrigerant by exchanging heat between the primary refrigerant passing through the compressor 32 to have a temperature and a pressure higher than before compression and the secondary refrigerant introduced from the outside of the refrigeration cycle 30.

The primary refrigerant inside the condenser 33 is cooled by the secondary refrigerant and simultaneously increases the temperature of the secondary refrigerant.

The primary refrigerant in a gas state introduced into the condenser 33 is cooled by the secondary refrigerant, passes through a two-phase state of a gas-liquid mixture, and then transitions to a liquid state.

The expansion valve 34 is a device that receives the primary refrigerant changing into a liquid state via the condenser 33 and adiabatically expands the primary refrigerant. The pressure of the primary refrigerant introduced to the expansion valve 34 is decreased to a predetermined pressure lower than before expansion due to the expansion action of the expansion valve 34. Accordingly, the temperature of the primary refrigerant becomes lower than before expansion.

### (Configuration of exterior flow passage, first switching valve, first pump, and exterior connection flow passage)

The exterior flow passage 40 is a flow passage that connects the evaporator 35 in the refrigeration cycle 30 and the vehicle exterior heat exchanger 10 in an annular shape. The secondary refrigerant flows through the exterior flow passage 40. The first pump 43, the first switching valve 45, and the exterior connection flow passage 44 are provided on the exterior flow passage 40. The first pump 43 pressure-feeds the secondary refrigerant flowing through the exterior flow passage 40. The first switching valve 45 is a three-way valve that can switch the flow state between three flow passages. The exterior connection flow passage 44 extends with bypassing the vehicle exterior heat exchanger 10 from the first switching valve 45 as a start point. The first switching valve 45 is electrically connected to the control unit 90 to be described later and the flow state of the secondary refrigerant is switched by the electric signal sent from the control unit 90.

### (Configuration of first bypass flow passage and first flow rate adjustment unit)

The first bypass flow passage 41 is provided alongside the exterior flow passage 40 and extends with bypassing the evaporator 35. A flow rate adjustment valve 70 is provided at one end of the first bypass flow passage 41 as the first flow rate adjustment unit 42. The flow rate adjustment valve 70 is a three-way valve. That is, the flow rate adjustment valve 70 can distribute the secondary refrigerant flowing from one flow passage into two flow passages and change the ratio of the flow rate of the secondary refrigerant between these two flow passages.

Specifically, the first flow rate adjustment unit 42 changes the ratio of the flow rate of the secondary refrigerant flowing into the evaporator 35 via the exterior flow passage 40 and the flow rate of the secondary refrigerant flowing into the first bypass flow passage 41. The ratio of the flow rate is realized by changing the internal structure of the valve of the flow rate adjustment valve 70. The flow rate adjustment valve 70 is electrically connected to the control unit 90 (to be described later). The internal structure of the valve is controlled based on the electric signal sent from the control unit 90.

### (Configuration of interior flow passage, second switching valve, second pump, and interior connection flow passage)

The interior flow passage 50 is a flow passage that connects the condenser 33 in the refrigeration cycle 30 and the vehicle interior heat exchanger 20 in an annular shape. The secondary refrigerant flows through the interior flow passage 50. The second pump 53, the second switching valve 55, and the interior connection flow passage 54 are provided on this interior flow passage 50. The second pump 53 pressure-feeds the secondary refrigerant flowing through the interior flow passage 50. The second switching valve 55 is a three-way valve similarly to the first switching valve 45. The second switching valve 55 is electrically connected to the control unit 90 to be described later and the flow state of the secondary refrigerant is switched by the electric signal sent from the control unit 90. The interior connection flow passage 54 extends with bypassing the vehicle interior heat exchanger 20 from the second switching valve 55 as a start point.

### (Configuration of second bypass flow passage and second flow rate adjustment unit)

The second bypass flow passage 51 is provided alongside the interior flow passage 50 and extends with bypassing the condenser 33. The flow rate adjustment valve 70 is provided at one end of the second bypass flow passage 51 as the second flow rate adjustment unit 52. The flow rate adjustment valve 70 is a three-way valve. That is, the flow rate adjustment valve 70 can distribute the secondary refrigerant flowing from one flow passage into two flow passages and change the ratio of the flow rate of the secondary refrigerant between these two flow passages.

Specifically, the second flow rate adjustment unit 52 changes the ratio of the flow rate of the secondary refrigerant flowing into the condenser 33 via the interior flow passage 50 and the flow rate of the secondary refrigerant flowing into the second bypass flow passage 51. The ratio of the flow rate is controlled based on the electric signal sent from the control unit 90 similarly to the first flow rate adjustment unit 42.

The exterior flow passage 40 and the interior flow passage 50 are connected by the pair of flow passage switching valves 60 (a first flow passage switching valve 61 and a second flow passage switching valve 62). More specifically, the first flow passage switching valve 61 is provided between the vehicle exterior heat exchanger 10 in the exterior flow passage 40 and the first flow rate adjustment unit 42 and between the vehicle interior heat exchanger 20 in the interior flow passage 50 and the second flow rate adjustment unit 52. Further, the second flow passage switching valve 62 is provided between the first switching valve 45 in the exterior flow passage 40 and the first pump 43 and between the second switching valve 55 in the interior flow passage 50 and the second pump 53.

As will be described later, the flow state of the secondary refrigerant between the exterior flow passage 40 and the interior flow passage 50 is mutually switched by providing the first flow passage switching valve 61 and the second flow passage switching valve 62. The first flow passage switching valve 61 and the second flow passage switching valve 62 are electrically connected to the control unit 90 (to be described later) and the flow state is switched based on the electric signal sent from the control unit 90.

### (Configuration of measurement unit)

The measurement unit 46 measures a physical quantity related to the pressure of the primary refrigerant on the downstream side of the evaporator 35 in the refrigeration cycle line 31. Additionally, the physical quantity mentioned herein may be the pressure of the primary refrigerant itself or the temperature of the primary refrigerant. That is, the measurement unit 46 is a pressure gauge or a thermometer. The physical quantity measured by the measurement unit 46 is sent to the control unit 90 as the electric signal. The control unit 90 adjusts the flow state of the first flow rate adjustment unit 42 based on the measurement result of the measurement unit 46.

### (Process flow of control unit)

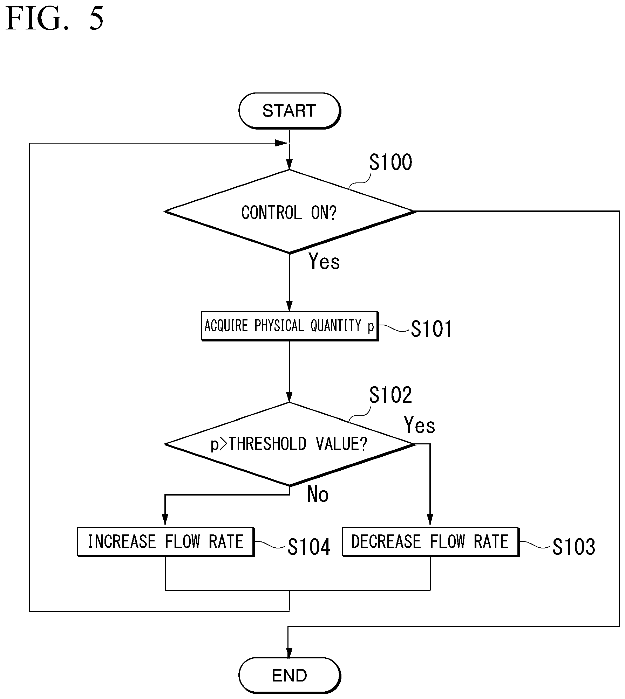

Next, the process flow of the control of the first flow rate adjustment unit 42 using the control unit 90 will be described with reference to FIG. 5. First, in step S100, it is determined whether or not the control using the control unit 90 is in an on state. In the case of an off state (step S100: No), the process ends. In the case of an on state (step S 100: Yes), the control unit 90 acquires a physical quantity p related to the pressure of the primary refrigerant from the measurement unit 46 in step S 101 below. Next, in step S 102, the control unit 90 determines the magnitude relationship between the physical quantity p and the threshold value. When it is determined that the physical quantity p is larger than the threshold value (step S 102: Yes), the process proceeds to step S 103. In step S103, the control unit 90 sends an electric signal to the first flow rate adjustment unit 42 (the flow rate adjustment valve 70) so that the flow rate of the secondary refrigerant flowing into the evaporator 35 changes in a decrease direction. On the other hand, when it is determined that the physical quantity p is smaller than the threshold value (step S102: No), the process proceeds to step S104. In step S104, the control unit 90 sends an electric signal to the first flow rate adjustment unit 42 (the flow rate adjustment valve 70) so that the flow rate of the secondary refrigerant flowing into the evaporator 35 changes in an increase direction. In this way, the flow state of the first flow rate adjustment unit 42 is controlled based on the physical quantity of the primary refrigerant flowing out from the evaporator 35.

### (Operation and effect)

Next, two operation modes during a heating operation among various operation modes of the vehicular refrigeration cycle unit 1 will be described. During the heating operation, the operation mode is appropriately selected between a heater mode that is used when the outside air temperature is particularly low (for example, about -20°C) and a heat pump mode that is used when the outside air temperature is higher than that of the heater mode.

### (Operation of heat pump mode)

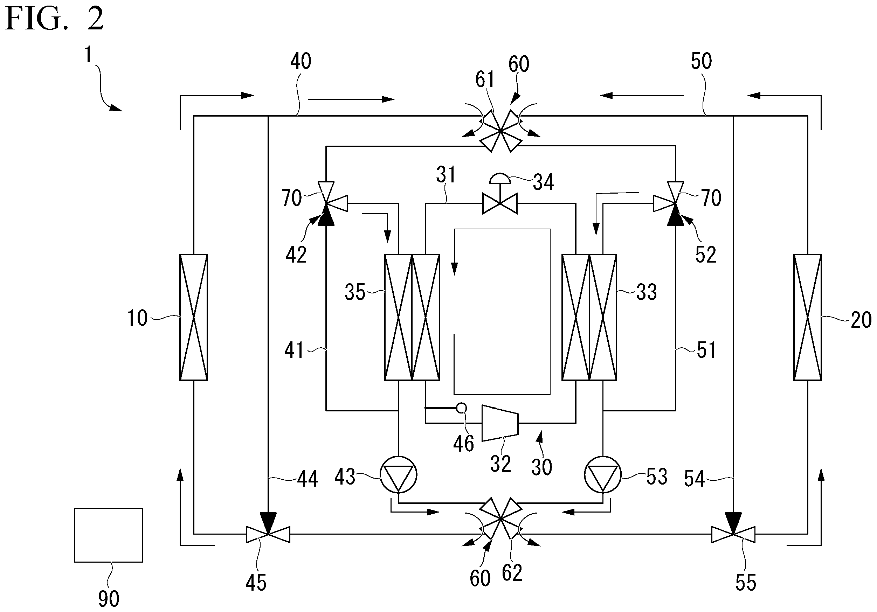

First, the operation of the heat pump mode during the heating operation will be described with reference to FIG. 2. As shown in the same drawing, the flow state of the first flow passage switching valve 61 and the second flow passage switching valve 62 is switched so that the exterior flow passage 40 and the interior flow passage 50 are independent of each other in this mode. Further, the exterior connection flow passage 44 and the interior connection flow passage 54 are respectively closed by the first switching valve 45 and the second switching valve 55. The first bypass flow passage 41 and the second bypass flow passage 51 are respectively closed by the first flow rate adjustment unit 42 and the second flow rate adjustment unit 52.

Accordingly, the secondary refrigerant flows through the path indicated by the arrow in FIG. 2. Specifically, in the exterior flow passage 40, the secondary refrigerant passing through the second flow passage switching valve 62 via the first pump 43 flows into the vehicle exterior heat exchanger 10 and then flows toward the first flow passage switching valve 61. Then, the secondary refrigerant flows into the evaporator 35 via the first flow rate adjustment unit 42. The secondary refrigerant exchanging heat with the primary refrigerant of the refrigeration cycle 30 in the evaporator 35 is in a low temperature state. The secondary refrigerant flowing out from the evaporator 35 flows into the first pump 43 again. Such a flow occurs continuously.

In the interior flow passage 50, the secondary refrigerant passing through the second flow passage switching valve 62 via the second pump 53 exchanges heat with interior air in the vehicle interior heat exchanger 20. Accordingly, the secondary refrigerant becomes a low temperature state and flows toward the first flow passage switching valve 61. Then, the secondary refrigerant flows to the condenser 33 via the second flow rate adjustment unit 52. The secondary refrigerant exchanging heat with the primary refrigerant in the condenser 33 becomes a high temperature state. The secondary refrigerant flowing out from the condenser 33 flows into the second pump 53 again. Such a flow occurs continuously.

With the above-described state, heat is exchanged between the primary refrigerant and the secondary refrigerant. Specifically, heat is exchanged between the relatively high-temperature outside air and the relatively low-temperature secondary refrigerant in the vehicle exterior heat exchanger 10. The heat of the secondary refrigerant heated by heat exchange with the outside air is transferred to the secondary refrigerant in the interior flow passage 50 via the refrigeration cycle 30. The secondary refrigerant in the interior flow passage 50 exchanges heat with the interior air in the vehicle interior heat exchanger 20. Accordingly, the interior temperature increases.

### (Operation of heater mode)

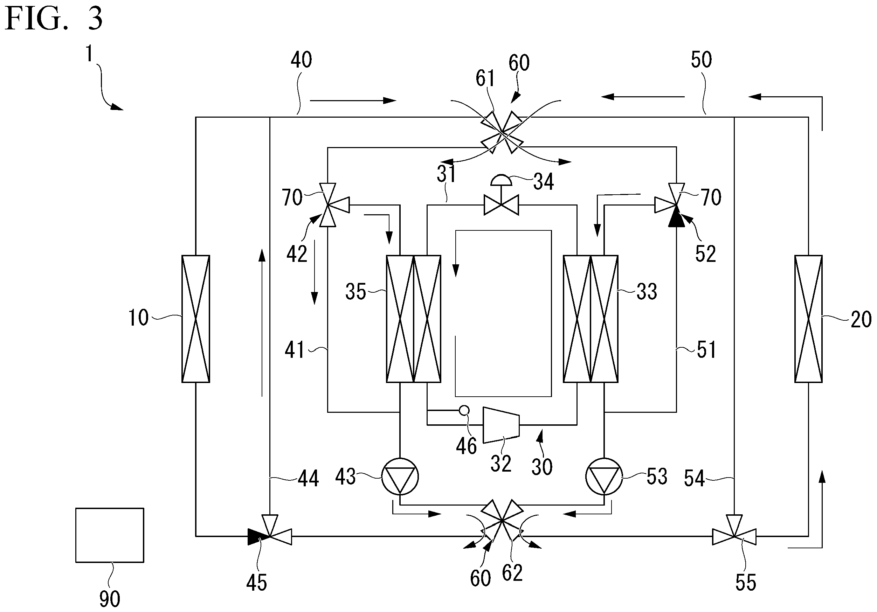

On the other hand, the open and close states of various valves and the flow state of the secondary refrigerant are as shown in FIG. 3 during a stationary operation of the heater mode. Specifically, the exterior connection flow passage 44 is opened by the first switching valve 45 and the secondary refrigerant flows with bypassing the vehicle exterior heat exchanger 10. In the first flow passage switching valve 61, the flow state is switched so that the secondary refrigerant flowing through the interior flow passage 50 flows into the exterior flow passage 40 and the secondary refrigerant flowing through the exterior flow passage 40 flows into the interior flow passage 50. In the second flow passage switching valve 62, the flow state is switched so that the secondary refrigerant discharged from the first pump 43 flows through the exterior flow passage 40 and the secondary refrigerant discharged from the second pump 53 flows through the interior flow passage 50.

In the first flow rate adjustment unit 42, the secondary refrigerant which flows from the interior flow passage 50 into the exterior flow passage 40 via the first flow passage switching valve 61 is distributed to the side of the evaporator 35 and the side of the first bypass flow passage 41. The ratio of the flow rate of the secondary refrigerant flowing through the evaporator 35 and the flow rate of the secondary refrigerant flowing through the first bypass flow passage 41 is controlled by the above-described control flow.

In the second flow rate adjustment unit 52, the secondary refrigerant which flows from the exterior flow passage 40 into the interior flow passage 50 via the first flow passage switching valve 61 is controlled to flow not to the second bypass flow passage 51 but to the condenser 33.

Accordingly, the secondary refrigerant flows through the path indicated by the arrow in FIG. 3. Specifically, the secondary refrigerant discharged from the first pump 43 flows toward the first switching valve 45 via the second flow passage switching valve 62 on the side of the evaporator 35. The secondary refrigerant flowing into the exterior connection flow passage 44 via the first switching valve 45 flows into the interior flow passage 50 via the first flow passage switching valve 61. The secondary refrigerant flowing into the interior flow passage 50 flows into the condenser 33 via the second flow rate adjustment unit 52. The secondary refrigerant that exchanges heat with the primary refrigerant in the condenser 33 becomes a high temperature state and flows into the second pump 53. The secondary refrigerant discharged from the second pump 53 flows through the interior flow passage 50 again via the second flow passage switching valve 62 and heads toward the vehicle interior heat exchanger 20.

The secondary refrigerant that exchanges heat with the interior air in the vehicle interior heat exchanger 20 becomes a low temperature state and heads toward the first flow passage switching valve 61 through the interior flow passage 50. The secondary refrigerant flowing into the exterior flow passage 40 via the first flow passage switching valve 61 is distributed to the flow toward the evaporator 35 and the flow toward the first bypass flow passage 41 via the first flow rate adjustment unit 42. In the evaporator 35, heat is exchanged between the secondary refrigerant and the primary refrigerant. Accordingly, the secondary refrigerant becomes a low-temperature state. These two flows merge on the downstream side of the evaporator 35 and then heads toward the first pump 43. The above-described flow of the secondary refrigerant continuously occurs.

With the above-described state, the relatively high-temperature secondary refrigerant flows from the interior flow passage 50 into the evaporator 35. Accordingly, the temperature of the primary refrigerant in the refrigeration cycle 30 that exchanges heat with the secondary refrigerant increases. As the temperature increases, the pressure and density of the primary refrigerant also increase. Since the density of the primary refrigerant increases, the load of the compressor 32 also increases. In other words, the work amount of the compressor 32 increases. As a result, the amount of heat generated in accordance with the operation of the compressor 32 increases. This increased amount of heat is transferred to the primary refrigerant and then transferred to the secondary refrigerant flowing through the interior flow passage 50 in the condenser 33 on the downstream side of the compressor 32. Accordingly, the temperature of the secondary refrigerant increases. The heated secondary refrigerant exchanges heat with the interior air in the vehicle interior heat exchanger 20. As a result, the interior temperature increases (heating occurs).

In this way, since it is possible to heat the primary refrigerant by the amount of heat due to the increased load of the compressor 32, it is possible to secure heating capacity without exchanging heat between the outside air and the secondary refrigerant using the vehicle exterior heat exchanger 10. Thus, there is no need to exchange heat between the secondary refrigerant and the outside air while the outside air temperature is too low. In other words, there is no need to make the temperature of the secondary refrigerant flowing through the exterior flow passage 40 lower than the outside air temperature. As a result, it is possible to perform the heating operation beyond the restriction imposed by the minimum temperature determined by the physical property values of the primary refrigerant.

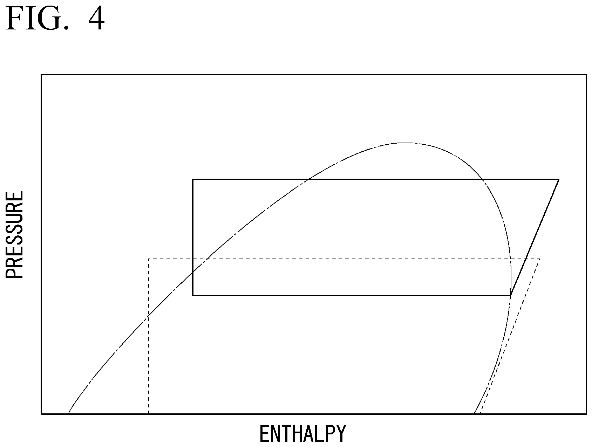

Furthermore, since the pressure of the primary refrigerant flowing into the compressor 32 increases as described above, the compression ratio of the compressor 32 decreases. That is, the Mollier diagram in this case becomes the graph indicated by the solid line in FIG. 4. Additionally, the dashed line in FIG. 4 indicates the Mollier diagram in the heat pump mode. When operating in the heater mode, the pressure shown on the vertical axis increases compared to the heat pump mode and the difference between the upper limit and the lower limit decreases compared to the heat pump mode. Accordingly, it is possible to operate the compressor 32 at a pressure close to the upper limit value of the discharge pressure of the compressor 32. As a result, the load of the compressor 32 further increases and more heat can be generated by the compressor 32. The heat generated by the compressor 32 is transferred to the primary refrigerant and then transferred to the secondary refrigerant flowing through the interior flow passage 50 in the condenser 33. Accordingly, the temperature of the secondary refrigerant increases. The heated secondary refrigerant exchanges heat with the interior air in the vehicle interior heat exchanger 20. As a result, it is possible to further improve the heating performance of the vehicular refrigeration cycle unit 1.

Additionally, according to the above-described configuration, it is possible to adjust the temperature of the primary refrigerant flowing through the evaporator 35 in the refrigeration cycle 30 by adjusting the flow rate of the secondary refrigerant flowing into the evaporator 35 using the first flow rate adjustment unit 42. Accordingly, since the pressure and density of the primary refrigerant change to desired values, it is possible to precisely adjust the load (work amount) of the compressor 32. That is, it is possible to precisely control the amount of heat transferred from the compressor 32 to the primary refrigerant. As a result, it is possible to precisely control the temperature of the secondary refrigerant during the heating operation.

Particularly, according to the above-described configuration, the control unit 90 appropriately adjusts the flow state of the first flow rate adjustment unit 42 based on the physical quantity related to the pressure of the secondary refrigerant on the downstream side of the evaporator 35. Accordingly, the ratio of the flow rates of the secondary refrigerants flowing into the evaporator 35 and the first bypass flow passage 41 changes autonomously. Thus, it is possible to more precisely control the amount of heat transferred from the compressor 32 to the primary refrigerant.

Additionally, when starting the heater mode, the second flow rate adjustment unit 52 is controlled so that the secondary refrigerant flows not to the condenser 33 but to the second bypass flow passage 51 contrary to the above description. Accordingly, the pressure of the primary refrigerant flowing through the condenser 33 in the refrigeration cycle 30 increases. Then, when shifting to the above-described stationary operation, the second flow rate adjustment unit 52 is controlled so that the flow rate of the secondary refrigerant flowing into the condenser 33 gradually increases.

By performing the above-described control, it is possible to control the pressure and temperature of the primary refrigerant flowing through the condenser 33 in the refrigeration cycle 30. Particularly, at startup, the amount of the secondary refrigerant flowing through the condenser 33 is minimized and the main flow is allowed to flow through the second bypass flow passage 51. Accordingly, the flow amount of the low-temperature secondary refrigerant flowing from the exterior flow passage 40 toward the interior flow passage 50 to flow into the condenser 33 is reduced. As a result, the pressure and temperature of the primary refrigerant in the refrigeration cycle 30 increase quickly. Thus, since the temperature of the secondary refrigerant exchanging heat with the primary refrigerant also increases quickly, it is possible to quickly heat the temperature of the interior air during the heating operation.

Furthermore, according to the above-described configuration, since the flow rate adjustment valve 70 is used as the first flow rate adjustment unit 42 and the second flow rate adjustment unit 52, it is possible to suppress an increase in the number of parts and avoid complicating the configuration. As a result, it is possible to more easily perform manufacturing and maintenance of the vehicular refrigeration cycle unit 1 at a lower cost.

As described above, the first embodiment of the present disclosure has been described. Additionally, various changes and modifications can be made to each of the above configurations without departing from the gist of the present disclosure. For example, in the above-described first embodiment, an example has been described in which the secondary refrigerant does not flow into the vehicle exterior heat exchanger 10 at all by switching the first switching valve 45 in the heater mode. However, the first switching valve 45 may be controlled so that a small flow rate of the secondary refrigerant flows through the vehicle exterior heat exchanger 10 depending on the outside air temperature or operation state.

### <Second embodiment>

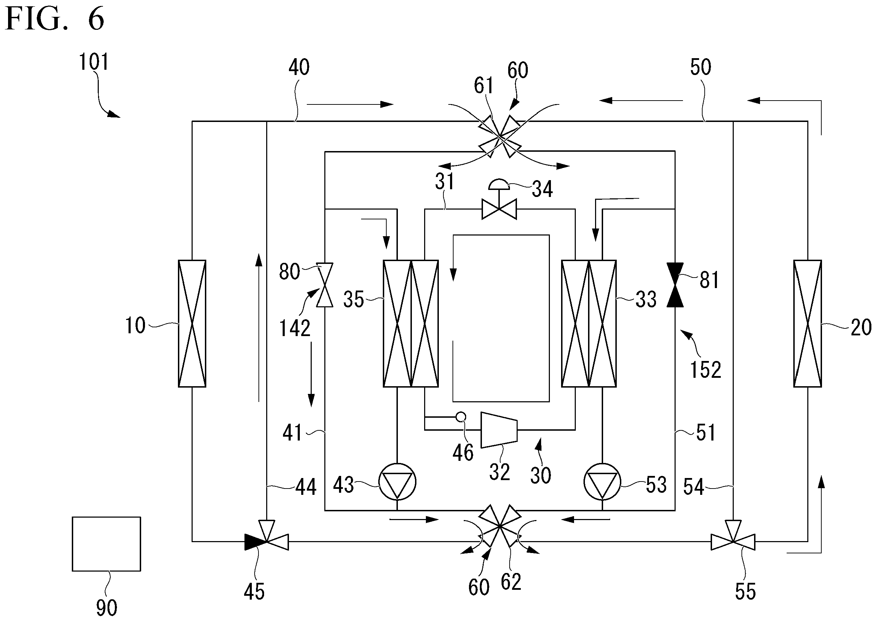

Next, a second embodiment of the present disclosure will be described with reference to FIG. 6. Additionally, the same configurations as those of the first embodiment are denoted by the same reference numerals and detailed descriptions are omitted. In a vehicular refrigeration cycle unit 101 according to this embodiment, the configurations of a first flow rate adjustment unit 142 and a second flow rate adjustment unit 152 are different from those of the first embodiment.

Specifically, in this embodiment, the first flow rate adjustment unit 142 and the second flow rate adjustment unit 152 are configured by on-off valves 80 and 81 instead of the flow rate adjustment valve 70. These on-off valves 80 and 81 are respectively provided on the first bypass flow passage 41 and the second bypass flow passage 51. The on-off valves 80 and 81 are electrically connected to the above-described control unit 90 and the opening and closing state is switched by the electric signal sent from the control unit 90.

Furthermore, the confluence of the first bypass flow passage 41 and the exterior flow passage 40 is located on the downstream side of the first pump 43. Similarly, the confluence of the second bypass flow passage 51 and the interior flow passage 50 is located on the downstream side of the second pump 53.

The first pump 43 and the second pump 53 have variable rotation speeds and can change the discharge flow rate. The first pump 43 and the second pump 53 are electrically connected to the control unit 90 and the discharge flow rate is controlled by the electric signal sent from a drive unit 94 of the control unit 90. The first pump 43 constitutes part of the first flow rate adjustment unit 142 and the second pump 53 constitutes part of the second flow rate adjustment unit 152.

FIG. 6 shows a state in which the vehicular refrigeration cycle unit 101 is operated in the heater mode. In the heater mode, the on-off valve 80 which is part of the first flow rate adjustment unit 142 is kept open. By changing the discharge flow rate of the first pump 43 which is a part of the first flow rate adjustment unit 142 in this state, the ratio of the flow rate of the secondary refrigerant flowing into the evaporator 35 and the flow rate of the secondary refrigerant flowing into the first bypass flow passage 41 is adjusted.

### (Operation and effect)

According to the above-described configuration, in addition to the operation and effect described in the first embodiment, since the on-off valves 80 and 81 are used instead of the flow rate adjustment valve 70, it is possible to reduce the costs required for manufacturing and maintenance of the device. Further, since the flow rate of the secondary refrigerant is controlled by controlling the discharge flow rates of the first pump 43 and the second pump 53, it is possible to more precisely adjust the temperature of the secondary refrigerant compared to a condition where the same flow rate control is performed using the flow rate adjustment valve 70.

As described above, the second embodiment of the present disclosure has been described. Additionally, various changes and modifications can be made to the above configuration without departing from the gist of the present disclosure.

### <Third embodiment>

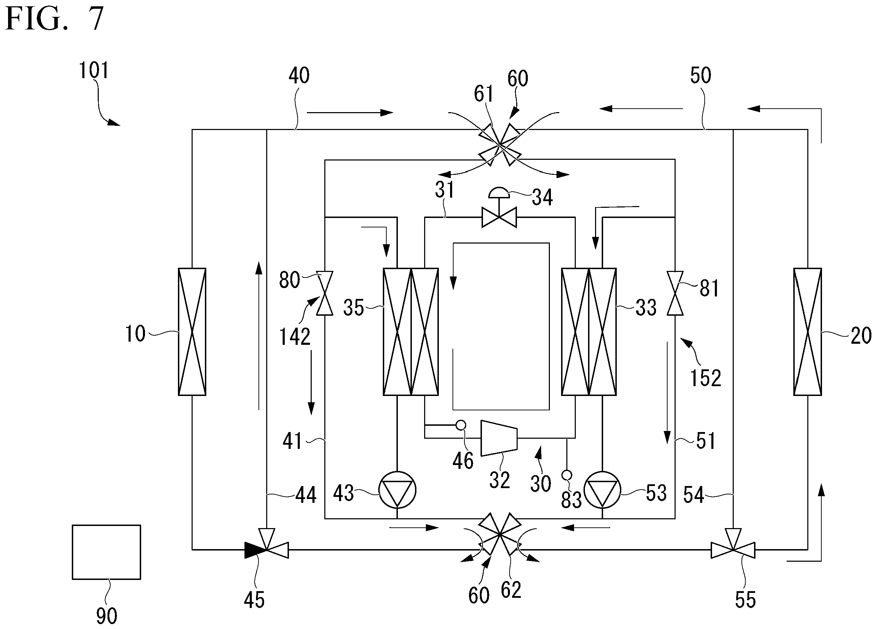

Next, a third embodiment of the present disclosure will be described with reference to FIGS. 7 to 10. Additionally, the same configurations as those of the above-described embodiments are denoted by the same reference numerals and detailed descriptions are omitted.

In this embodiment, various controls and configurations for accelerating the startup of the heater mode will be described. A vehicular refrigeration cycle unit 201 according to this embodiment further includes a first temperature measurement unit 47, a second temperature measurement unit 48, a third temperature measurement unit 49, and a pressure measurement unit 83 in addition to each configuration described in the second embodiment. The first temperature measurement unit 47 measures the temperature of the secondary refrigerant on the downstream side of the confluence between the first bypass flow passage 41 and the exterior flow passage 40. The second temperature measurement unit 48 measures the temperature of the primary refrigerant at the inlet of the compressor 32. The third temperature measurement unit 49 measures the temperature of the secondary refrigerant on the downstream side of the confluence between the interior flow passage 50 and the second bypass flow passage 51. The first temperature measurement unit 47, the second temperature measurement unit 48, and the third temperature measurement unit 49 are temperature sensors or thermometers. Additionally, the first temperature measurement unit 47, the second temperature measurement unit 48, and the third temperature measurement unit 49 are not shown in FIG. 7. The pressure measurement unit 83 measures the pressure (high pressure side pressure) of the primary refrigerant on the downstream side of the compressor 32. The pressure measurement unit 83 is a pressure sensor or pressure gauge. Further, in this embodiment, a blower 21 provided alongside the vehicle interior heat exchanger 20 is shown.

### (First control when starting heater mode)

In a condition where the pressure (high pressure side pressure) of the primary refrigerant measured by the pressure measurement unit 83 is lower than a predetermined threshold value when starting the heater mode, the flow rate of the secondary refrigerant flowing into the condenser 33 is decreased as shown in FIG. 7.

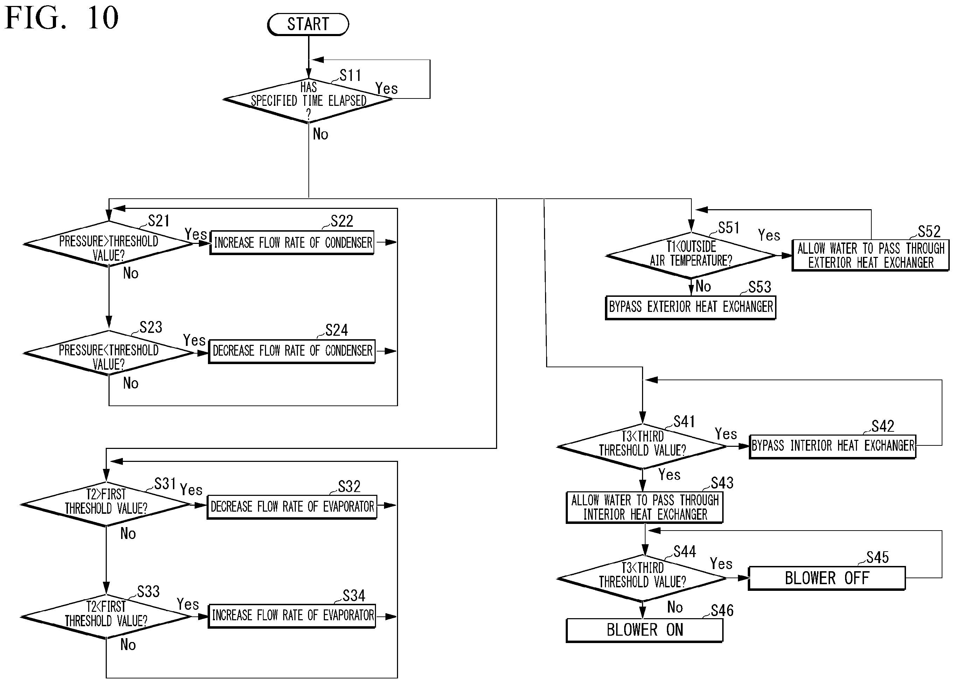

The above-described control is realized by steps S21 to S24 in the control flow shown in FIG. 10. In step S21, it is determined whether or not the pressure of the primary refrigerant measured by the pressure measurement unit 83 is higher than the threshold value. When it is determined that the pressure is higher than the threshold value (step S21: Yes), the condenser flow rate is increased in step S22. When the determination in step S21 is No, it is determined whether or not the pressure of the primary refrigerant measured by the pressure measurement unit 83 is lower than the threshold value in step S23. When the determination in step S23 is Yes, the condenser flow rate is decreased in step S24.

Since the flow of the secondary refrigerant to the condenser 33 when starting the vehicular refrigeration cycle unit 201 is reduced in this way, the temperature of the primary refrigerant is increased for a temperature difference with the secondary refrigerant to radiate heat from the primary refrigerant in the condenser 33. As a result, the pressure and temperature of the primary refrigerant increase quickly. Accordingly, it is possible to quickly heat the interior air.

### (Second control when starting heater mode)

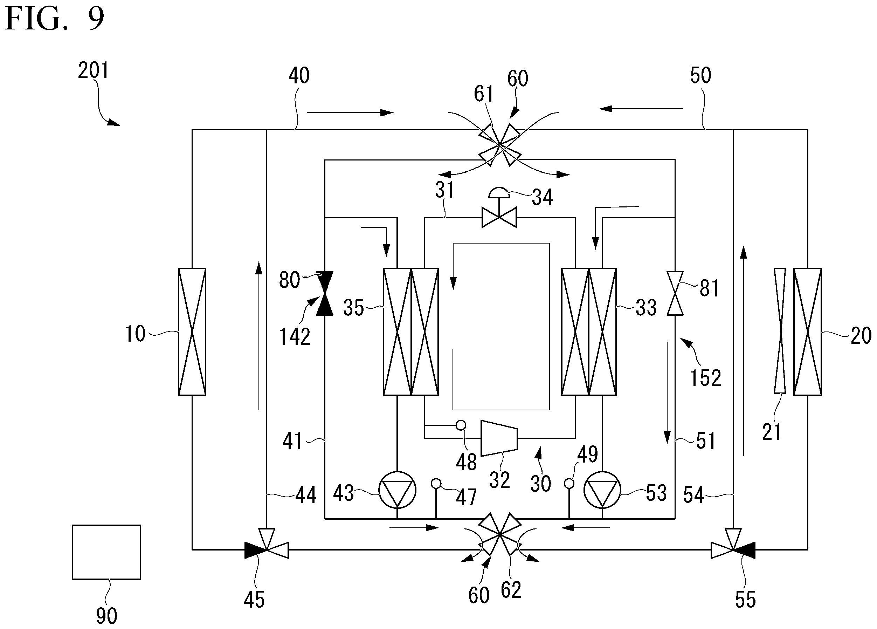

In addition to the above, as shown in FIG. 9, in a condition where the temperature T1 of the secondary refrigerant measured by the first temperature measurement unit 47 is higher than the outside air temperature when starting the heater mode, the control unit 90 switches the flow state of the first switching valve 45 so that the secondary refrigerant flows into the exterior connection flow passage 44. On the other hand, in another condition where the temperature of the secondary refrigerant measured by the first temperature measurement unit 47 is lower than the outside air temperature, the control unit switches the flow state of the first switching valve 45 so that the secondary refrigerant flows into the vehicle exterior heat exchanger 10.

The above-described control is realized by steps S51 to S53 in the control flow shown in FIG. 10. In step S51, it is determined whether or not the temperature T1 of the secondary refrigerant measured by the first temperature measurement unit 47 is lower than the outside air temperature. When the determination in step S51 is Yes, the flow state of the first switching valve 45 is switched so that the secondary refrigerant flows into the vehicle exterior heat exchanger 10 in step S52. On the other hand, when the determination in step S51 is No, the flow state of the first switching valve 45 is switched so that the secondary refrigerant flows into the exterior connection flow passage 44 with bypassing the vehicle exterior heat exchanger 10 in step S53.

Here, since the heating performance decreases in the condition where the heat amount of the secondary refrigerant decreases, the secondary refrigerant bypasses the vehicle exterior heat exchanger 10 using the exterior connection flow passage 44 when the temperature of the secondary refrigerant is higher than the outside air temperature. Accordingly, it is possible to prevent a decrease in the heat amount of the secondary refrigerant and to prevent a decrease in the pressure (low pressure side pressure) of the primary medium on the side of the evaporator 35. Thus, it is possible to quickly obtain a heating effect when starting the vehicular refrigeration cycle unit 1.

### (Third control when starting heater mode)

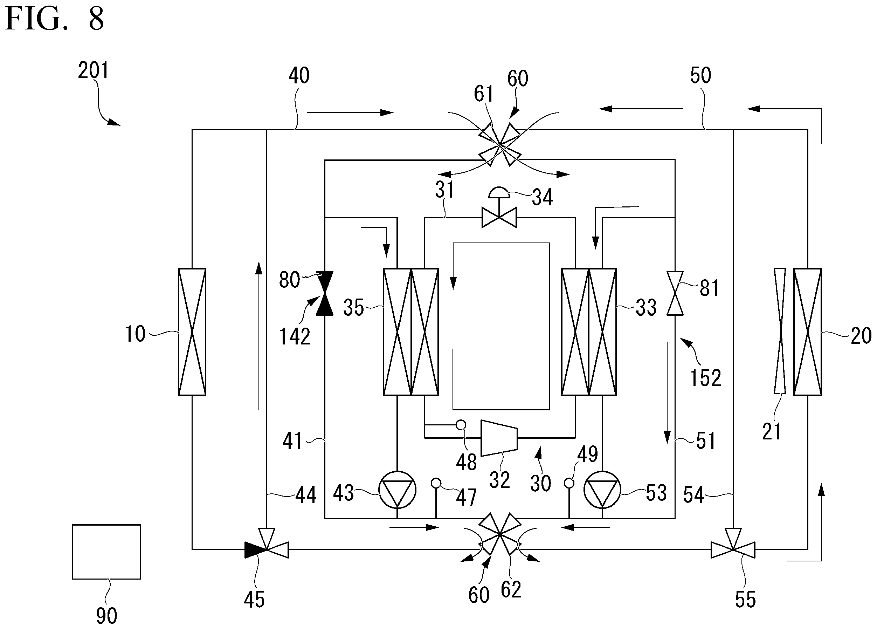

As another control for accelerating the startup of the heater mode, as shown in FIG. 8, the control unit 90 increases the flow rate of the secondary refrigerant flowing into the evaporator in a condition where the temperature T2 of the primary refrigerant at the inlet of the compressor 32 measured by the second temperature measurement unit 48 is lower than a predetermined first threshold value when starting the vehicular refrigeration cycle unit 1.

The above-described control is realized by steps S31 to S34 in the control flow shown in FIG. 10. In step S31, it is determined whether or not the temperature of the primary refrigerant measured by the second temperature measurement unit 48 is higher than the first threshold value. When it is determined that the temperature is higher than the first threshold value (step S31: Yes), the evaporator flow rate is decreased in step S32. On the other hand, when the determination in step S31 is No, it is determined whether or not the temperature of the primary refrigerant measured by the second temperature measurement unit 48 is lower than the threshold value in step S33. When the determination in step S33 is Yes, the evaporator flow rate is increased in step S34.

According to the above-described configuration, it is possible to control the pressure and temperature of the primary refrigerant flowing through the evaporator 35 by adjusting the amount of the secondary refrigerant flowing into the evaporator 35. In particular, the pressure and temperature of the primary refrigerant increase quickly by allowing the secondary refrigerant to flow through the evaporator 35 at startup. Accordingly, it is possible to quickly heat the interior air.

Specifically, when the flow rate of the secondary refrigerant flowing out from the condenser 33 and flowing through the evaporator 35 increases, the amount of heat absorbed from the secondary refrigerant to the primary refrigerant increases and the low pressure side pressure of the primary refrigerant increases. When the low pressure side pressure of the primary refrigerant increases, the temperature of the primary refrigerant at the inlet of the compressor 32 increases and hence the refrigerant density of the primary refrigerant at the inlet of the compressor 32 also increases. Therefore, even when the rotation speed of the compressor is the same, the circulation amount of the primary refrigerant increases and hence the power of the compressor 32 increases. Since the power of the compressor 32 increases, the high pressure side pressure of the primary refrigerant also increases due to the heat generated in the compressor 32. Then, the temperature of the secondary refrigerant in the condenser 33 also increases and the temperature of the secondary refrigerant flowing out from the condenser 33 and supplied to the vehicle interior heat exchanger 20 also increases. As a result, it is possible to more quickly increase the temperature of the air supplied into the vehicle interior.

### (Fourth control when starting heater mode)

Furthermore, as shown in FIG. 9, in a condition where the temperature T3 of the secondary refrigerant measured by the third temperature measurement unit 49 is lower than a predetermined second threshold value when starting the heater mode, the control unit 90 switches the flow state of the second switching valve 55 so that the secondary refrigerant flows into the interior connection flow passage 54. On the other hand, in another condition where the temperature T3 of the secondary refrigerant measured by the third temperature measurement unit 49 is higher than the predetermined second threshold value, the control unit switches the flow state of the second switching valve 55 so that the secondary refrigerant flows into the vehicle interior heat exchanger 20.

Furthermore, when the temperature T3 of the secondary refrigerant measured by the third temperature measurement unit 49 is lower than a predetermined third threshold value when starting the heater mode, the control unit 90 stops the blower 21. That is, when the temperature of the secondary refrigerant is lower than the third threshold value, the supply of warm air to the vehicle interior is stopped. On the other hand, when the temperature of the secondary refrigerant increases and becomes higher than the third threshold value, the blower 21 is driven to start the supply of warm air to the vehicle interior.

The above-described control is realized by steps S41 to S46 in the control flow shown in FIG. 10. In step S41, it is determined whether or not the temperature T3 of the secondary refrigerant measured by the third temperature measurement unit 49 is lower than the predetermined second threshold value. When the determination in step S41 is Yes, the process proceeds to step S42. In step S42, the flow state of the second switching valve 55 is switched so that the secondary refrigerant flows into the interior connection flow passage 54 with bypassing the vehicle interior heat exchanger 20. On the other hand, when the determination in step S41 is No, the flow state of the second switching valve 55 is switched so that the secondary refrigerant flows into the vehicle interior heat exchanger 20 in step S43. Further, in step S44, it is determined whether or not the temperature T3 of the secondary refrigerant measured by the third temperature measurement unit 49 is lower than the predetermined third threshold value. When the determination in step S44 is Yes, the driving of the blower 21 is stopped in step S45. On the other hand, when the determination in step S44 is No, the blower 21 is driven in step S46.

According to the above-described configuration, in the condition where the temperature of the secondary refrigerant on the downstream side of the confluence between the interior flow passage 50 and the second bypass flow passage 51 is lower than the second threshold value when starting the vehicular refrigeration cycle unit 1, the second switching valve 55 is switched so that the secondary refrigerant is not supplied to the vehicle interior heat exchanger 20 and flows into the interior connection flow passage 54. Accordingly, the amount of the secondary refrigerant to be heated by the condenser 33 can be reduced. As the heat capacity of the secondary refrigerant decreases, the temperature increases faster and hence the temperature of the secondary refrigerant increases faster. Thus, it is possible to quickly obtain a heating effect when starting the vehicular refrigeration cycle unit 1.

Furthermore, according to the above-described configuration, the supply of air to the vehicle interior heat exchanger 20 using the blower 21 stops until the temperature of the secondary refrigerant on the downstream side of the confluence between the interior flow passage 50 and the second bypass flow passage 51 reaches the third threshold value. Accordingly, the heat exchange between the secondary refrigerant and air in the vehicle interior heat exchanger 20 is suppressed. As a result, the temperature of the secondary refrigerant increases quickly. Thus, it is possible to shorten the time until the temperature of the air finally supplied into the vehicle interior from the vehicle interior heat exchanger 20 reaches the set temperature.

As described above, the embodiments of the present disclosure have been described. Additionally, various changes and modifications can be made to the above configuration without departing from the gist of the present disclosure. For example, the process flow of the control unit 90 in each of the above-described embodiments may be performed by changing the process order in an appropriate process range.

Further, the "exterior flow passage 40" and the "interior flow passage 50" do not necessarily mean that they are provided only outside the vehicle interior or only inside the vehicle interior. That is, part of the exterior flow passage 40 may be provided inside the vehicle interior when necessary and a part of the interior flow passage 50 may be provided outside the vehicle interior.

Furthermore, all of the four control flows described in the third embodiment may be implemented in the control unit 90 and all of them may be performed simultaneously or only four or less appropriately selected control flows may be implemented and performed.

### <Appendix>

The vehicular refrigeration cycle unit 1 described in each embodiment is understood, for example, as below.
(1) The vehicular refrigeration cycle unit 1 according to a first aspect is the vehicular refrigeration cycle unit 1 which is installed between the vehicle exterior heat exchanger 10 and the vehicle interior heat exchanger 20 and exchanging heat between the secondary refrigerants respectively flowing through the vehicle exterior heat exchanger 10 and the vehicle interior heat exchanger 20, the vehicular refrigeration cycle unit including: the refrigeration cycle 30 including the compressor 32, the condenser 33, the expansion valve 34, and the evaporator 35 through which the primary refrigerant sequentially flows; the exterior flow passage 40 through which the secondary refrigerant is circulated between the evaporator 35 and the vehicle exterior heat exchanger 10; the interior flow passage 50 through which the secondary refrigerant is circulated between the condenser 33 and the vehicle interior heat exchanger 20; the pair of flow passage switching valves 60 connecting the exterior flow passage 40 and the interior flow passage 50 to allow to switch the flow state of the secondary refrigerant; the first bypass flow passage 41 which is installed aside the exterior flow passage 40 and with bypassing the evaporator 35; and the first flow rate adjustment unit 42 adjusting the flow rate of the secondary refrigerant flowing into the first bypass flow passage 41 and the evaporator 35, wherein the first flow rate adjustment unit 42 is the flow passage switching valve distributing the secondary refrigerant flowing from one flow passage into two flow passage and is allowed to change the ratio of the flow rate of the secondary refrigerant between these two flow passages.
   According to the above-described configuration, it is possible to precisely adjust the load of the compressor 32 by adjusting the amount of the secondary refrigerant flowing into the evaporator 35 using the first flow rate adjustment unit 42. Accordingly, it is possible to precisely control the amount of heat transferred from the compressor 32 to the primary refrigerant.
(2) The vehicular refrigeration cycle unit 1 according to a second aspect is the vehicular refrigeration cycle unit 1 of (1), wherein the first flow rate adjustment unit 42 includes the on-off valve 80 installed in the first bypass flow passage 41 and the first pump 43 installed in the exterior flow passage 40.
   According to the above-described configuration, it is possible to configure the device at a low cost by configuring the first flow rate adjustment unit 42 only with the on-off valve 80 and the first pump 43.
(3) The vehicular refrigeration cycle unit 1 according to a third aspect is the vehicular refrigeration cycle unit 1 of (1) or (2) further including: the control unit 90 switching the states of the pair of flow passage switching valves 60 and the first flow rate adjustment unit 42, wherein the flow states of the flow passage switching valves 60 are switched by the control unit 90 so that the secondary refrigerant, which has flowed out from the vehicle interior heat exchanger 20 via the interior flow passage 50, is flowed into at least one of the evaporator 35 and the first bypass flow passage 41 via the exterior flow passage 40.
   According to the above-described configuration, the high-temperature secondary refrigerant flowing out from the vehicle interior heat exchanger 20 flows into the evaporator 35. Accordingly, the temperature and density of the primary refrigerant heading to the compressor 32 from the evaporator 35 increase. As a result, the load of the compressor 32 increases and hence the amount of heat transferred from the compressor 32 to the primary refrigerant can be increased.
(4) The vehicular refrigeration cycle unit 1 according to a fourth aspect is the vehicular refrigeration cycle unit 1 of (3) further including: the measurement unit 46 measuring the physical quantity related to the pressure of the primary refrigerant on the downstream side of the evaporator 35 in the refrigeration cycle 30, wherein the flow state of the first flow rate adjustment unit 42 is adjusted by the control unit 90 based on the measurement result of the measurement unit 46.
   According to the above-described configuration, since the flow state of the first flow rate adjustment unit 42 is adjusted based on the physical quantity related to the pressure of the primary refrigerant on the downstream side of the evaporator 35, the ratio of the flow rate of the secondary refrigerant flowing into the evaporator 35 and the first bypass flow passage 41 changes. Accordingly, it is possible to more precisely control the amount of heat transferred from the compressor 32 to the primary refrigerant.
(5) The vehicular refrigeration cycle unit 1 according to a fifth aspect is the vehicular refrigeration cycle unit 1 of any one aspect of (1) to (4) further including: the second bypass flow passage 51 which is installed aside the interior flow passage 50 with bypassing the condenser 33; and the second flow rate adjustment unit 52 adjusting the flow rate of the secondary refrigerant flowing into the second bypass flow passage 51 and the condenser 33.
   According to the above-described configuration, it is possible to control the pressure and temperature of the primary refrigerant flowing through the condenser 33 by adjusting the amount of the secondary refrigerant flowing into the condenser 33 using the second flow rate adjustment unit 52.
(6) The vehicular refrigeration cycle unit 1 according to a sixth aspect is the vehicular refrigeration cycle unit 1 of (5), wherein the second flow rate adjustment unit 52 is the flow passage switching valve distributing the secondary refrigerant flowing from one flow passage into two flow passages and is allowed to change the ratio of the flow rate of the secondary refrigerant between these two flow passages.
   According to the above-described configuration, it is possible to more easily perform the manufacturing or maintenance of the device by using the flow rate adjustment valve.
(7) The vehicular refrigeration cycle unit 1 according to a seventh aspect is the vehicular refrigeration cycle unit 1 of (5), wherein the second flow rate adjustment unit 52 includes the on-off valve 81 installed in the second bypass flow passage 51 and the second pump 53 installed in the interior flow passage 50.
   According to the above-described configuration, it is possible to configure the device at a low cost by configuring the second flow rate adjustment unit 52 only with the on-off valve 81 and the second pump 53.
(8) The vehicular refrigeration cycle unit 1 according to an eighth aspect is the vehicular refrigeration cycle unit 1 of any one aspect of (5) to (7) further including: the control unit 90 switching the states of the pair of flow passage switching valves 60 and the second flow rate adjustment unit 52, wherein, when starting the vehicular refrigeration cycle unit 1, the flow states of the flow passage switching valves 60 and the second flow rate adjustment unit 52 are switched by the control unit 90 so that the secondary refrigerant passing through the exterior flow passage 40 flows into the second bypass flow passage 51 via the interior flow passage 50, and wherein, during a stationary operation of the vehicular refrigeration cycle unit 1, the flow state of the second flow rate adjustment unit 52 is switched by the control unit 90 so that the secondary refrigerant flows into the condenser 33.
   According to the above-described configuration, it is possible to control the pressure and temperature of the primary refrigerant flowing through the condenser 33 by adjusting the amount of the secondary refrigerant flowing through the condenser 33 using the second flow rate adjustment unit 52. Particularly, at startup, since the secondary refrigerant does not flow through the condenser 33, the pressure and temperature of the primary refrigerant increase quickly. Accordingly, it is possible to quickly heat the interior air.
(9) The vehicular refrigeration cycle unit 1 according to a ninth aspect is the vehicular refrigeration cycle unit 1 of (3) or (4), wherein, when starting the vehicular refrigeration cycle unit 1,the flow states of the flow passage switching valves 60 and the first flow rate adjustment unit 42 are switched by the control unit 90 so that the secondary refrigerant passing through the interior flow passage 50 flows into the evaporator 35 through the exterior flow passage 40, and wherein, during a stationary operation of the vehicular refrigeration cycle unit 1, the flow state of the first flow rate adjustment unit 42 is switched by the control unit 90 so that the secondary refrigerant flows into the first bypass flow passage 41.
   According to the above-described configuration, it is possible to control the pressure and temperature of the primary refrigerant flowing through the evaporator 35 by adjusting the amount of the secondary refrigerant flowing into the evaporator 35 using the first flow rate adjustment unit 42. Particularly, at startup, since the secondary refrigerant flows through the evaporator 35, the pressure and temperature of the primary refrigerant increase quickly. Accordingly, it is possible to quickly heat the interior air.
(10) The vehicular refrigeration cycle unit 1 according to a tenth aspect is the vehicular refrigeration cycle unit 1 of (9) further including: the exterior connection flow passage 44 which is installed aside the exterior flow passage 40 with bypassing the vehicle exterior heat exchanger 10; the first switching valve 45 switching the flow state of the exterior connection flow passage 44; and the first temperature measurement unit 47 measuring the temperature of the secondary refrigerant on the downstream side of the confluence between the first bypass flow passage 41 and the exterior flow passage 40, wherein, when starting the vehicular refrigeration cycle unit 1, the flow state of the first switching valve 45 is switched by the control unit 90 so that the secondary refrigerant flows into the exterior connection flow passage 44 in a condition where the temperature of the secondary refrigerant measured by the first temperature measurement unit 47 is higher than the outside air temperature, and the flow state of the first switching valve 45 is switched by the control unit 90 so that the secondary refrigerant flows into the vehicle exterior heat exchanger 10 in another condition where the temperature of the secondary refrigerant measured by the first temperature measurement unit 47 is lower than the outside air temperature.
   Since the heating performance decreases when the heat amount of the secondary refrigerant decreases, the secondary refrigerant bypasses the vehicle exterior heat exchanger 10 using the exterior connection flow passage 44 when the temperature of the secondary refrigerant is higher than the outside air temperature. Accordingly, it is possible to prevent a decrease in the heat amount of the secondary refrigerant and to prevent a decrease in the pressure (low pressure side pressure) of the primary refrigerant on the side of the evaporator 35. Thus, it is possible to quickly obtain a heating effect when starting the vehicular refrigeration cycle unit 1.
(11) The vehicular refrigeration cycle unit 1 according to an eleventh aspect is the vehicular refrigeration cycle unit 1 of (9) or (10) further including: the interior connection flow passage 54 which is installed aside the interior flow passage 50 and with bypassing the vehicle interior heat exchanger 20; the second switching valve 55 switching the flow state of the interior connection flow passage 54; and the second temperature measurement unit 48 measuring the temperature of the primary refrigerant at the inlet of the compressor 32 of the refrigeration cycle 30, wherein, when starting the vehicular refrigeration cycle unit 1, the flow state of the second switching valve 55 is switched by the control unit 90 so that the secondary refrigerant flows into the interior connection flow passage 54 in a condition where the temperature of the primary refrigerant measured by the second temperature measurement unit 48 is lower than the predetermined first threshold value, and the flow state of the second switching valve 55 is switched by the control unit 90 so that the secondary refrigerant flows into the vehicle interior heat exchanger 20 in another condition where the temperature of the primary refrigerant measured by the second temperature measurement unit 48 is higher than the first threshold value.
   According to the above-described configuration, the amount of the secondary refrigerant to be heated by the condenser 33 can be reduced. As the heat capacity of the secondary refrigerant decreases, the temperature increases faster and hence the temperature of the secondary refrigerant increases faster. Thus, it is possible to quickly obtain a heating effect when starting the vehicular refrigeration cycle unit 1.
(12) The vehicular refrigeration cycle unit 1 according to a twelfth aspect is the vehicular refrigeration cycle unit 1 of (8) further including: the blower 21 which is installed aside the vehicle interior heat exchanger 20 and supplying air exchanging heat in the vehicle interior heat exchanger 20 into the vehicle interior; and the third temperature measurement unit 49 measuring the temperature of the secondary refrigerant on the downstream side of the confluence between the interior flow passage 50 and the second bypass flow passage 51, wherein, when starting the vehicular refrigeration cycle unit 1, the blower 21 is stopped by the control unit 90 in a condition where the temperature of the secondary refrigerant measured by the third temperature measurement unit 49 is lower than the predetermined second threshold value, and the blower 21 is driven by the control unit 90 in another condition where the temperature of the secondary refrigerant measured by the third temperature measurement unit 49 is higher than the second threshold value.

According to the above-described configuration, the supply of air to the vehicle interior heat exchanger 20 using the blower 21 stops until the temperature of the secondary refrigerant on the downstream side of the confluence between the interior flow passage 50 and the second bypass flow passage 51 reaches the second threshold value. Accordingly, it is possible to more quickly increase the temperature of the air supplied from the vehicle interior heat exchanger 20 into the vehicle interior.

### Industrial Applicability

In the vehicular refrigeration cycle unit, it is possible to more precisely adjust the temperature of the secondary refrigerant.

### Reference Signs List

1 Vehicular refrigeration cycle unit
10 Vehicle exterior heat exchanger
20 Vehicle interior heat exchanger
21 Blower
30 Refrigeration cycle
31 Refrigeration cycle line
32 Compressor
33 Condenser
34 Expansion valve
35 Evaporator
40 Outdoor flow passage
41 First bypass flow passage
42 First flow rate adjustment unit
43 First pump
44 Outdoor connection flow passage
45 First switching valve
46 Measurement unit
47 First temperature measurement unit
48 Second temperature measurement unit
49 Third temperature measurement unit
50 Indoor flow passage
51 Second bypass flow passage
52 Second flow rate adjustment unit
53 Second pump
54 Interior connection flow passage
55 Second switching valve
60 Flow passage switching valve
61 First flow passage switching valve
62 Second flow passage switching valve
70 Flow rate adjustment valve
80 On-off valve
81 On-off valve
83 Pressure measurement unit
90 Control unit
101 Vehicular refrigeration cycle unit
142 First flow rate adjustment unit
152 Second flow rate adjustment unit
201 Vehicular refrigeration cycle unit

## Claims

1. A vehicular refrigeration cycle unit which is installed between a vehicle exterior heat exchanger and a vehicle interior heat exchanger and exchanging heat between secondary refrigerants respectively flowing through the vehicle exterior heat exchanger and the vehicle interior heat exchanger, the vehicular refrigeration cycle unit comprising:
a refrigeration cycle including a compressor, a condenser, an expansion valve, and an evaporator through which a primary refrigerant sequentially flows;
an exterior flow passage through which the secondary refrigerant is circulated between the evaporator and the vehicle exterior heat exchanger;
an interior flow passage through which the secondary refrigerant is circulated between the condenser and the vehicle interior heat exchanger;
a pair of flow passage switching valves connecting the exterior flow passage and the interior flow passage to allow to switch a flow state of the secondary refrigerant between the exterior flow passage and the interior flow passage;
a first bypass flow passage which is installed aside the exterior flow passage with bypassing the evaporator; and
a first flow rate adjustment unit adjusting a flow rate of the secondary refrigerant flowing into the first bypass flow passage and the evaporator,
wherein the first flow rate adjustment unit is a flow passage switching valve distributing the secondary refrigerant flowing from one flow passage into two flow passages and is allowed to change a ratio of a flow rate of the secondary refrigerant between these two flow passages.

2. The vehicular refrigeration cycle unit according to claim 1,
wherein the first flow rate adjustment unit includes an on-off valve installed in the first bypass flow passage and a first pump installed in the exterior flow passage.

3. The vehicular refrigeration cycle unit according to claim 1 or 2, further comprising:
a control unit switching states of the pair of flow passage switching valves and the first flow rate adjustment unit,
wherein flow states of the flow passage switching valves are switched by the control unit so that the secondary refrigerant, which has flowed out from the vehicle interior heat exchanger via the interior flow passage, is flowed into at least one of the evaporator and the first bypass flow passage via the exterior flow passage.

4. The vehicular refrigeration cycle unit according to claim 3, further comprising:
a measurement unit measuring a physical quantity related to a pressure of the primary refrigerant on the downstream side of the evaporator in the refrigeration cycle,
wherein a flow state of the first flow rate adjustment unit is adjusted by the control unit based on a measurement result of the measurement unit.

5. The vehicular refrigeration cycle unit according to claim 1, further comprising:
a second bypass flow passage which is installed aside the interior flow passage with bypassing the condenser; and
a second flow rate adjustment unit adjusting a flow rate of the secondary refrigerant flowing into the second bypass flow passage and the condenser.

6. The vehicular refrigeration cycle unit according to claim 5,
wherein the second flow rate adjustment unit is a flow passage switching valve distributing the secondary refrigerant flowing from one flow passage into two flow passages and is allowed to change a ratio of the flow rate of the secondary refrigerant between these two flow passages.

7. The vehicular refrigeration cycle unit according to claim 5,
wherein the second flow rate adjustment unit includes an on-off valve installed in the second bypass flow passage and a second pump installed in the interior flow passage.

8. The vehicular refrigeration cycle unit according to claim 5, further comprising:
a control unit switching states of the pair of flow passage switching valves and the second flow rate adjustment unit,
wherein, when starting the vehicular refrigeration cycle unit, flow states of the flow passage switching valves and the second flow rate adjustment unit are switched by the control unit so that the secondary refrigerant passing through the exterior flow passage flows into the second bypass flow passage via the interior flow passage, and
wherein, during a stationary operation of the vehicular refrigeration cycle unit, the flow state of the second flow rate adjustment unit is switched by the control unit so that the secondary refrigerant flows into the condenser.

9. The vehicular refrigeration cycle unit according to claim 3,
wherein, when starting the vehicular refrigeration cycle unit, flow states of the flow passage switching valves and the first flow rate adjustment unit are switched by the control unit so that the secondary refrigerant passing through the interior flow passage flows into the evaporator through the exterior flow passage, and
wherein, during a stationary operation of the vehicular refrigeration cycle unit, the flow state of the first flow rate adjustment unit is switched by the control unit so that the secondary refrigerant flows into the first bypass flow passage.

10. The vehicular refrigeration cycle unit according to claim 9, further comprising:
an exterior connection flow passage which is installed aside the exterior flow passage with bypassing the vehicle exterior heat exchanger;
a first switching valve switching a flow state of the exterior connection flow passage; and
a first temperature measurement unit measuring a temperature of the secondary refrigerant on the downstream side of a confluence between the first bypass flow passage and the exterior flow passage,
wherein, when starting the vehicular refrigeration cycle unit, a flow state of the first switching valve is switched by the control unit so that the secondary refrigerant flows into the exterior connection flow passage in a condition where a temperature of the secondary refrigerant measured by the first temperature measurement unit is higher than an outside air temperature, and the flow state of the first switching valve is switched by the control unit so that the secondary refrigerant flows into the vehicle exterior heat exchanger in another condition where the temperature of the secondary refrigerant measured by the first temperature measurement unit is lower than the outside air temperature.

11. The vehicular refrigeration cycle unit according to claim 9, further comprising:
an interior connection flow passage which is installed aside the interior flow passage and with bypassing the vehicle interior heat exchanger;
a second switching valve switching a flow state of the interior connection flow passage; and
a second temperature measurement unit measuring a temperature of the primary refrigerant at an inlet of the compressor of the refrigeration cycle,
wherein, when starting the vehicular refrigeration cycle unit, a flow state of the second switching valve is switched by the control unit so that the secondary refrigerant flows into the interior connection flow passage in a condition where a temperature of the primary refrigerant measured by the second temperature measurement unit is lower than a predetermined first threshold value, and the flow state of the second switching valve is switched by the control unit so that the secondary refrigerant flows into the vehicle interior heat exchanger in another condition where the temperature of the primary refrigerant measured by the second temperature measurement unit is higher than the first threshold value.

12. The vehicular refrigeration cycle unit according to claim 8, further comprising:
a blower which is installed aside the vehicle interior heat exchanger and supplying air exchanging heat in the vehicle interior heat exchanger into a vehicle interior; and
a third temperature measurement unit measuring a temperature of the secondary refrigerant on the downstream side of a confluence between the interior flow passage and the second bypass flow passage,
wherein, when starting the vehicular refrigeration cycle unit, the blower is stopped by the control unit in a condition where a temperature of the secondary refrigerant measured by the third temperature measurement unit is lower than a predetermined second threshold value, and the blower is driven by the control unit in another condition where the temperature of the secondary refrigerant measured by the third temperature measurement unit is higher than the second threshold value.
